(19) Europäisches Patentamt / European Patent Office / Office européen des brevets

(11) **EP 4 323 789 B1**

(12) **FASCICULE DE BREVET EUROPEEN**

(45) Date de publication et mention de la délivrance du brevet:
**12.03.2025 Bulletin 2025/11**

(21) Numéro de dépôt: **22723465.5**

(22) Date de dépôt: **13.04.2022**

(51) Classification Internationale des Brevets (IPC):
**G01S 1/04** *(2006.01)*     **G01S 1/30** *(2006.01)*

(52) Classification Coopérative des Brevets (CPC):
**G01S 1/0428; G01S 1/045; G01S 1/30**

(86) Numéro de dépôt international:
**PCT/FR2022/050695**

(87) Numéro de publication internationale:
**WO 2022/219286 (20.10.2022 Gazette 2022/42)**

(54) **SYSTÈME ET PROCÉDÉ DE POSITIONNEMENT D'AU MOINS UN MOBILE RÉCEPTEUR**

SYSTEM UND VERFAHREN ZUR POSITIONIERUNG VON MINDESTENS EINEM MOBILEN EMPFÄNGER

SYSTEM AND METHOD FOR POSITIONING AT LEAST ONE MOBILE RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2021 FR 2103806**

(43) Date de publication de la demande:
**21.02.2024 Bulletin 2024/08**

(73) Titulaire: **Wheere**
**34000 Montpellier (FR)**

(72) Inventeurs:
• **CARRABIN, Antoine**
**75003 PARIS (FR)**
• **COQUELIN, Pierre-Arnaud**
**12640 Rivière sur tarn (FR)**
• **DAVID-GRIGNOT, Stéphane**
**34730 Prades-le-Lez (FR)**

(74) Mandataire: **Yes My Patent**
**32 Boulevard Richard Lenoir**
**75011 Paris (FR)**

(56) Documents cités:
**US-A1- 2015 201 309     US-A1- 2020 209 337**

**Description**

**Domaine technique**

L'invention concerne un système et un procédé de positionnement d'au moins un mobile récepteur. Le domaine technique de l'invention est celui du positionnement d'un mobile récepteur, par le mobile lui-même, dans un environnement aussi bien extérieur (outdoor en anglais), qu'à l'intérieur des bâtiments (indoor en anglais). Le système comprend, outre le mobile récepteur, des bases émettrices fixes ou antennes qui sont configurées pour émettre des signaux radiofréquences à destination du mobile récepteur. Le calcul du temps de transmission ou temps de vol, par le mobile récepteur lors de la transmission de ces signaux, lui permet de déterminer la distance à laquelle il se trouve de chaque base, et donc d'en déduire sa position.

**Technique antérieure**

La localisation de mobiles récepteurs en environnement extérieur a connu un important saut technologique avec le déploiement du système GPS (de l'anglais Global Positioning System) dans les années 80. Toutefois, la technologie GPS ne fonctionne pas en environnement intérieur, typiquement à l'intérieur des bâtiments, et relativement mal dans les environnements urbains. Les deux principales contraintes des environnements intérieurs ou urbains sont en effet :

- la pénétration des bâtiments et divers obstacles par les signaux d'intérêt (qui constitue un facteur limitant pour la portée du système de positionnement) ; et

- l'existence de multi-trajets impactant l'onde émise, qui se traduit par de nombreuses répliques du signal original décalées dans le temps et d'amplitude variable arrivant au mobile récepteur, de tels signaux multi-trajets étant appelés rebonds.

Il existe donc un besoin pour des systèmes de positionnement de mobiles récepteurs qui présentent à la fois une grande portée (typiquement supérieure à 10 km) et qui fonctionnent aussi bien en environnement extérieur qu'intérieur.
De manière connue, un système de localisation en environnement extérieur ou intérieur comprend le plus souvent, en plus du mobile à positionner, un jeu d'au moins trois balises. Ces balises sont particularisées en ce que leur position est connue. De plus elles sont le plus souvent fixes. Dans une telle configuration de système, les balises maîtrisent les transmissions : une balise émet à l'attention d'un mobile, le mobile répond en réémettant à l'attention de la balise. La mesure du temps de transmission, par mesure différentielle de la date d'émission relativement à la date de réception, permet de déterminer la distance entre la balise et le mobile. Toutefois un tel système nécessite une rémission de signaux de la part du mobile récepteur vers les balises, afin qu'un serveur distant en déduise la position du mobile, et ne permet donc pas au mobile d'effectuer lui-même son positionnement.
De manière connue également, des systèmes de radiolocalisation utilisent des signaux radiofréquences modulés, émis par des balises ou antennes fixes, pour transmettre par exemple des données de positionnement ou des données aléatoires à un récepteur. De telles données aléatoires, par exemple connues à l'avance du récepteur, servent à aider ce dernier à se synchroniser sur les données aléatoires en effectuant des corrélations de signaux. Toutefois, de tels systèmes impliquent l'utilisation d'une grande largeur de bande d'émission de fréquences, typiquement une largeur de bande de plusieurs dizaines ou centaines de MHz pour des systèmes de positionnement à la précision métrique ou sub-métrique. Un tel fonctionnement est particulièrement coûteux. En outre, de tels systèmes de radiolocalisation ne permettent pas un fonctionnement dual, aussi bien en environnement extérieur qu'intérieur.
Il est également connu de l'état de la technique des systèmes de positionnement d'un objet, mettant en œuvre une méthode par interférométrie de phase, qui utilise l'amplitude et la phase. Le document brevet US 2020/0209337 A1 décrit un tel système de positionnement. Le système comprend au moins deux bases émettrices fixes qui émettent des signaux radiofréquences. Le système comprend également un mobile récepteur, apte à déterminer la position d'une des bases émettrices fixes. Pour ce faire, le mobile récepteur devient un dispositif maitre qui émet un signal comprenant une portion sinusoïdale. La base émettrice dont la position est à déterminer devient un dispositif esclave qui mesure la phase et l'amplitude du signal à réception. Elle retourne cette information au dispositif maître ainsi qu'une portion sinusoïdale similaire pour permettre au dispositif maître de détecter la phase et l'amplitude du signal reçu. Le dispositif maître applique alors une transformée de Fourier discrète sur les signaux mesurés, dans le domaine temporel, afin de déterminer la distance et ainsi la position du dispositif esclave. Une telle détermination est effectuée par mesure de temps de vol. Toutefois, un tel système de positionnement ne permet pas au mobile récepteur de déterminer rapidement et facilement son propre positionnement. En effet, le mobile récepteur est obligé dans ce cas de déterminer successivement la position d'au moins trois bases émettrices fixes, puis de croiser ces mesures pour en déduire sa position. Une telle détermination est longue, fastidieuse et donc coûteuse. En outre, afin d'éviter la perturbation des mesures due à la présence de multi-trajets, le système décrit dans ce document met en œuvre des algorithmes à super résolution. Toutefois, la mise en en œuvre d'un tel système entraîne une bande de bruit relativement importante, ce qui nuit à la sensibilité du système. En effet, la transmission d'informations occasionnée par ce système (transmission de signaux modulés), implique d'avoir une largeur de canal relativement importante, et donc que le récepteur est obligé de prendre en compte tout le canal pour retrouver l'information. La précision de la localisation peut ainsi s'en trouver affectée.

Le document US 2015 / 201309 A1 divulgue la technique du TDOA ("Time Difference of Arrival").

**Résumé de l'invention**

Un but de la présente invention est de pallier au moins partiellement les inconvénients précités.

En particulier, un objectif de la présente invention est de fournir un système de positionnement d'au moins un mobile récepteur présentant à la fois une grande portée (typiquement supérieure à 10 km) et fonctionnant aussi bien en environnement extérieur qu'intérieur, permettant au mobile lui-même de se positionner de manière précise, et permettant de limiter l'occupation spectrale tout en présentant une sensibilité augmentée et une bande de bruit équivalent réduite au maximum.

Un autre objectif de la présente invention est de fournir un système de positionnement d'au moins un mobile récepteur permettant au mobile lui-même de se positionner de manière précise, en discriminant les signaux en ligne de vue directe provenant d'une base émettrice, des différents rebonds de signaux (multi-trajets).

Pour cela, l'invention a pour objet un système de positionnement d'au moins un mobile récepteur, le système comprenant, outre le mobile, au moins deux bases émettrices fixes, chaque base émettrice étant configurée pour émettre des signaux radiofréquences, les bases émettrices étant synchronisées entre elles pour émettre leurs signaux respectifs, le mobile récepteur étant configuré pour recevoir et traiter lesdits signaux radiofréquences et pour en déduire sa position par calcul de différence(s) de temps de vol entre le mobile récepteur et les bases émettrices, le mobile récepteur comprenant des moyens de stockage de données de position des bases émettrices fixes,

> dans lequel chaque base émettrice est configurée pour émettre une somme d'au moins deux signaux à porteuse pure non modulée de fréquences distinctes, chaque signal à porteuse pure se présentant sous la forme d'une onde entretenue non modulée, de préférence sinusoïdale ;
> et le mobile récepteur comprend en outre :

- des moyens de mesure, pour chaque fréquence de signal donnée et pour chaque base émettrice respective, de la phase du signal constitué des différents signaux issus de ladite base et présentant ladite fréquence ; et

- des moyens de calcul reliés aux moyens de mesure et aux moyens de stockage, et configurés pour :

  o appliquer, pour chaque base émettrice, une transformée de Fourier sur un signal constitué des différentes phases mesurées des signaux radiofréquences issus de ladite base ;

  o déterminer, pour chaque base émettrice, à partir de la transformée de Fourier calculée pour ladite base, un temps de vol entre le mobile récepteur et ladite base ;

  o calculer au moins une différence de temps de vol entre le mobile et deux bases émettrices, ladite différence étant calculée comme la différence entre les temps de vol déterminés pour lesdites bases ;

  o déterminer la position du mobile récepteur, à partir de la ou des différence(s) de temps de vol calculée(s) et des données de position des bases émettrices.

L'utilisation par le système de signaux à porteuse pure se présentant sous la forme d'ondes entretenues non modulées permet de limiter l'occupation spectrale, et donc d'assurer une très bonne sensibilité du système en réduisant au maximum la bande de bruit équivalent. De tels signaux présentent en effet une occupation spectrale réduite au minimum. Ceci permet d'obtenir un système de positionnement de mobile récepteur présentant une grande portée ainsi qu'un faible coût de fonctionnement, fonctionnant aussi bien en environnement extérieur qu'intérieur, et permettant au mobile lui-même de se positionner de manière précise. Une telle approche par émission de sommes de signaux à porteuse pure non modulée n'est pas utilisée dans les systèmes de positionnement et de radiolocalisation de l'art antérieur, en particulier à cause des multi-trajets (rebonds du signal émis qui arrivent au mobile récepteur avec un décalage temporel) qui sont difficiles à dissocier du signal original en ligne de vue directe, lorsqu'un tel signal est une onde entretenue non modulée. L'utilisation par le système selon l'invention d'une transformée de Fourier appliquée sur un signal constitué des différentes phases mesurées des signaux radiofréquences permet au mobile récepteur de discriminer les rebonds du signal principal, et de mesurer ainsi les temps de vol (entre le mobile et les bases) non entachés d'erreurs dues au multi-trajet. A la différence de certains systèmes de positionnement de l'art antérieur, qui appliquent une transformée de Fourier sur un signal temporel, le système de positionnement selon l'invention applique une transformée de Fourier sur un signal constitué de phases de signaux de différentes fréquences. Une telle approche permet au mobile récepteur de pouvoir distinguer les rebonds du signal principal, ce dernier étant le premier à arriver au mobile récepteur (les rebonds arrivant ensuite). En outre, les bases émettrices du système de positionnement selon l'invention ne transmettent aucune donnée modulée, contrairement à beaucoup de systèmes de l'art antérieur. Ceci permet de réduire l'occupation spectrale et donc le coût et la complexité du système.

Avantageusement, pour chaque base émettrice, l'écart fréquentiel entre la fréquence minimale et la fréquence maximale des signaux à porteuse pure émis par ladite base est supérieur à 50 MHz. Ceci permet de réduire la résolution de la transformée de Fourier, et donc d'obtenir une précision de localisation améliorée, typiquement inférieure à 1 m. La résolution de la transformée de Fourier ainsi réduite permet alors d'améliorer la séparation ou discrimination entre le signal en ligne de vue directe provenant d'une base émettrice d'une part, et les différents rebonds du signal (multi-trajets) d'autre part. En effet, une telle séparation ou discrimination est possible à condition que la résolution de la transformée de Fourier soit suffisamment fine, plus précisément à condition qu'elle soit inférieure à l'intervalle de temps séparant le signal principal (en ligne de vue directe) du rebond considéré. Le système de positionnement selon l'invention permet d'obtenir une précision de localisation pour le mobile récepteur inférieure à 1 m, même à l'intérieur de bâtiments ou en environnement urbain, et ce sans recourir à des signaux de type GPS ou GNSS (de l'anglais Global Navigation Satellite System).

Selon un mode préféré, chaque signal à porteuse pure émis par une base émettrice présente une fréquence située dans la bande des très hautes fréquences, autrement dit présente une fréquence comprise dans la plage allant de 30 MHz à 300 MHz. Ceci permet d'obtenir le meilleur compromis entre pénétrabilité des signaux à l'intérieur de bâtiments, limitation des phénomènes de multi-trajets, et dimensions des antennes d'émission et de réception. En outre, l'utilisation de tels signaux limite fortement la bande passante utilisé. La bande des très hautes fréquences offre par ailleurs un large choix quant à l'utilisation de signaux sinusoïdaux purs.

De préférence, les bases émettrices fixes sont configurées pour émettre le même nombre de signaux à porteuse pure non modulée.

Avantageusement, les bases émettrices fixes sont configurées de sorte à émettre leurs sommes de signaux à porteuse pure non modulée de manière décalée en fréquence, avec un décalage fréquentiel prédéterminé entre deux bases émettrices successives. Ceci permet au mobile récepteur de pouvoir distinguer les sommes de signaux à porteuse pure non modulée issues de chacune des bases émettrices.

De préférence, le décalage fréquentiel est compris dans la plage allant de 100 Hz à 1 kHz. Une telle valeur de décalage fréquentiel permet aux sommes de signaux à porteuse pure non modulée de pouvoir être facilement séparées par le mobile récepteur, tout en restant dans le même canal fréquentiel (de largeur fréquentielle égale à 12,5 kHz, dans la bande des très hautes fréquences). Ceci permet de limiter le nombre de canaux fréquentiels occupés, et de réduire par conséquent le coût de mise en œuvre du système.

Selon une caractéristique technique particulière de l'invention, les bases émettrices fixes sont des antennes, de préférence des antennes réparties de telle sorte que la distance entre deux antennes adjacentes est supérieure ou égale à 5 kms.

Selon une autre caractéristique technique particulière de l'invention, le mobile récepteur est une puce ou une carte électronique ou encore un appareil de communication mobile tel qu'un téléphone portable.

De préférence, chaque base émettrice fixe est configurée pour synchroniser entre eux les signaux à porteuse pure non modulée émis par la base.

Selon une caractéristique technique particulière de l'invention, chaque base émettrice fixe est configurée pour émettre une somme S1 de N signaux sinusoïdaux non modulés de fréquences $\omega_k$ distinctes, ladite somme S1 vérifiant la forme de l'équation suivante :

[Math 1]

$$S1 = \sum_{k=1}^{N} \cos(\omega_k t)$$

L'invention a également pour objet un procédé de positionnement d'au moins un mobile récepteur, mis en œuvre par un système de positionnement comprenant, outre le mobile, au moins deux bases émettrices fixes, chaque base émettrice étant configurée pour émettre des signaux radiofréquences, les bases émettrices étant synchronisées entre elles pour émettre leurs signaux respectifs, le mobile récepteur comprenant des moyens de mesure de phases de signaux,

EP 4 323 789 B1

des moyens de stockage de données, et des moyens de calcul reliés aux moyens de mesure et aux moyens de stockage, le procédé comprenant une étape initiale de transmission de données de position des bases émettrices fixes aux moyens de stockage du mobile récepteur, dans lequel le procédé comprend en outre les étapes suivantes :

- une émission, par chacune des bases émettrices, d'une somme d'au moins deux signaux à porteuse pure non modulée de fréquences distinctes, chaque signal à porteuse pure se présentant sous la forme d'une onde entretenue non modulée, de préférence sinusoïdale ;

- une réception, par le mobile récepteur, des signaux radiofréquences issus des bases émettrices ;

- une mesure, par le mobile récepteur, pour chaque fréquence de signal donnée et pour chaque base émettrice respective, de la phase du signal constitué des différents signaux issus de ladite base et présentant ladite fréquence ;

- une application, par le mobile récepteur et pour chaque base émettrice, d'une transformée de Fourier sur un signal constitué des différentes phases mesurées des signaux radiofréquences reçus de ladite base ;

- une détermination, par le mobile récepteur et pour chaque base émettrice, à partir de la transformée de Fourier calculée pour ladite base, d'un temps de vol entre le mobile récepteur et ladite base ;

- un calcul, par le mobile récepteur, d'au moins une différence de temps de vol entre le mobile et deux bases émettrices, ladite différence étant calculée comme la différence entre les temps de vol déterminés pour lesdites bases ;

- une détermination, par le mobile récepteur, de sa position à partir de la ou des différence(s) de temps de vol calculée(s) et des données de position des bases émettrices.

Selon une caractéristique technique particulière de l'invention, lors de l'étape d'application d'une transformée de Fourier, la transformée de Fourier est une transformée de Fourier discrète.

Avantageusement, lors de l'étape d'application d'une transformée de Fourier, les moyens de calcul du mobile récepteur utilisent le temps de vol comme variable indépendante pour la transformée de Fourier appliquée.

## Brève description des dessins

L'invention sera mieux comprise à la lecture de la description qui suit, faite uniquement à titre d'exemple, et en référence aux figures en annexe dans lesquelles :

[Fig. 1] montre un schéma d'un système de positionnement d'un mobile récepteur selon l'invention,

[Fig. 2] montre un organigramme représentant un procédé de positionnement d'un mobile récepteur selon l'invention, mis en œuvre par le système de la figure 1, et

[Fig. 3] montre un graphique représentant deux transformées de Fourier en fonction du temps de vol, chaque transformée de Fourier correspondant à une base émettrice distincte et ayant été appliquée par le mobile récepteur sur un signal constitué des différentes phases mesurées des signaux radiofréquences issus de cette base.

## Description des modes de réalisation

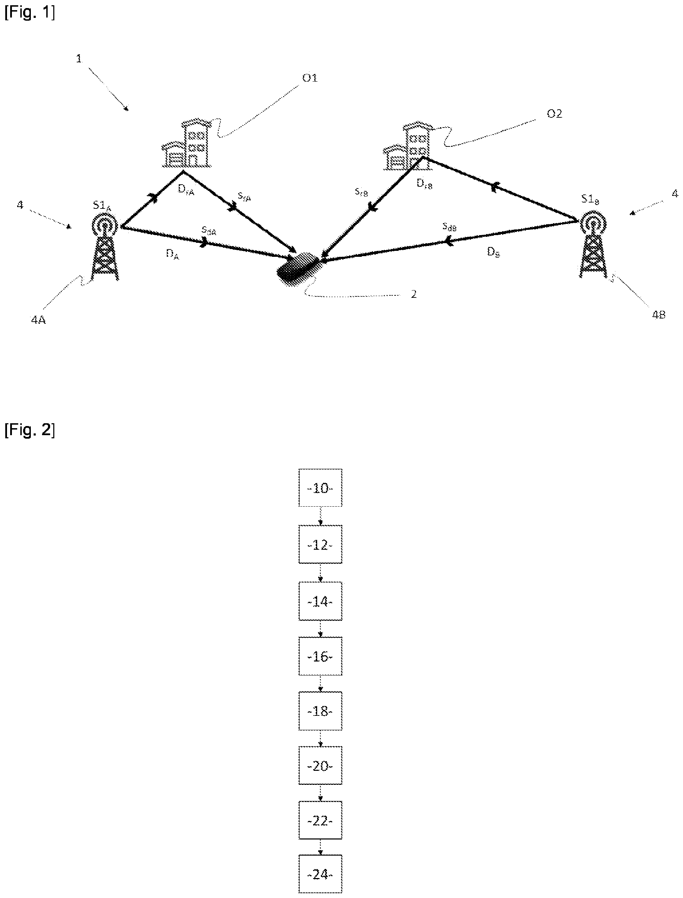

Dans la suite, il est divulgué un système 1 de positionnement d'un mobile récepteur 2. Le système 1 comprend, outre le mobile récepteur 2, au moins deux bases émettrices fixes 4. Dans l'exemple de réalisation particulier de la figure 1, sur laquelle est représenté un tel système de positionnement 1, le système 1 comprend deux bases émettrices fixes 4A, 4B. Cependant, l'invention s'applique de la même manière à tout système de positionnement comportant un nombre de bases émettrices supérieur ou égal à deux, et de préférence supérieur ou égal à trois. Le fait de prévoir au moins trois bases émettrices dans le système de positionnement permet d'assurer une meilleure robustesse pour le système.

Le mobile récepteur 2 est configuré pour recevoir et traiter des signaux radiofréquences $s_{dA}$, $s_{dB}$, $s_{rA}$, $s_{rB}$ issus des bases émettrices fixes 4A, 4B, et pour en déduire sa position par calcul de différence(s) de temps de vol entre le mobile récepteur 2 et les bases émettrices 4A, 4B (comme cela sera décrit par la suite). Ce calcul de temps de vol différentiel permet d'éviter toute contrainte de synchronisation temporelle entre le mobile récepteur 2 et les bases émettrices 4A, 4B.

Le mobile récepteur 2 comprend des moyens de stockage (non représentés), configurés pour stocker des données de position des bases émettrices fixes 4A, 4B. Les moyens de stockage sont typiquement constitués d'une mémoire, typiquement une mémoire non volatile. Le mobile récepteur 2 comprend en outre des moyens de mesure de phases de signaux radiofréquences, ces moyens de mesure n'étant pas représentés sur les figures pour des raisons de clarté. Le mobile récepteur 2 comprend également des moyens de calcul (non représentés) reliés aux moyens de mesure et aux moyens de stockage. Les moyens de mesure et de calculs sont typiquement constitués d'une unité de traitement, par exemple formée d'un ou plusieurs processeurs, ou intégrée au sein d'une puce électronique. A titre d'exemples non limitatifs, le mobile récepteur 2 est typiquement constitué d'une puce ou d'une carte électronique, par exemple intégrées dans un appareil portatif ; ou encore d'un appareil de communication mobile tel qu'un téléphone portable. Dans le cas où le mobile récepteur 2 est constitué d'une puce électronique ou d'un appareil de communication mobile de type téléphone portable, celle-ci ou celui-ci est typiquement muni d'un convertisseur analogique-numérique.

Chaque base émettrice 4A, 4B est typiquement une antenne d'émission de signaux radiofréquences $S1_A$, $S1_B$, $s_{dA}$, $s_{dB}$, $s_{rA}$, $s_{rB}$. De préférence, lorsque les bases émettrices 4A, 4B sont des antennes, ces dernières sont réparties de telle sorte que la distance entre deux antennes adjacentes est supérieure ou égale à 5 kms. Les bases émettrices 4A, 4B du système de positionnement 1 sont synchronisées entre elles pour émettre leurs signaux respectifs. Par « synchronisées entre elles » on entend que le déphasage entre les signaux émis par les différentes bases émettrices 4A, 4B est constant, ceci afin d'éviter des dérives dans les signaux, et d'éviter ainsi de fausser la mesure effectuée par le mobile récepteur 2 pour son positionnement.

Chaque base émettrice 4A, 4B est configurée pour émettre une somme $S1_A$, $S1_B$ d'au moins deux signaux à porteuse pure non modulée de fréquences distinctes. Chaque signal à porteuse pure se présente sous la forme d'une onde entretenue non modulée, de préférence sinusoïdale. Selon un mode de réalisation préférentiel, chaque signal à porteuse pure non modulée est un signal sinusoïdal pur, et chaque base émettrice fixe 4A, 4B est configurée pour émettre une somme $S1_A$, $S1_B$ de N signaux sinusoïdaux non modulés de fréquences $\omega_k$ distinctes. Chaque somme $S1_A$, $S1_B$ de signaux vérifie la forme de l'équation générale suivante :

[Math 2]

$$S1_{A,B} = \sum_{k=1}^{N} \cos(\omega_k t)$$

De préférence, l'écart fréquentiel entre la fréquence minimale et la fréquence maximale parmi les fréquences $\omega_k$ des signaux à porteuse pure émis par chaque base émettrice 4A, 4B est supérieur à 50 MHz. De préférence encore, chaque signal à porteuse pure émis par une base émettrice 4A, 4B présente une fréquence située dans la bande des très hautes fréquences, autrement dit présente une fréquence comprise dans la plage allant de 30 MHz à 300 MHz. Des bandes de fréquences appartenant aux très hautes fréquences VHF (de l'anglais Very High Fréquences) sont ainsi attribuées aux bases émettrices fixes 4A, 4B du système de positionnement 1.

De préférence, les bases émettrices fixes 4 sont configurées pour émettre le même nombre N de signaux à porteuse pure non modulée. Selon un mode de réalisation préférentiel, les bases émettrices 4 sont configurées de sorte à émettre leurs sommes S1 de signaux à porteuse pure non modulée de manière décalée en fréquence, avec un décalage fréquentiel prédéterminé $\Delta\omega$ entre deux bases émettrices successives 4. Ainsi, dans l'exemple de réalisation illustré sur la figure 1, une première base émettrice 4A, respectivement une deuxième base émettrice 4B, est configurée pour émettre une somme $S1_A$, respectivement $S1_B$, de signaux sinusoïdaux non modulés vérifiant l'équation suivante :

[Math 3]

$$S1_A = \sum_{k=1}^{N} \cos(\omega_k t)$$

[Math 4]

$$S1_B = \sum_{k=1}^{N} \cos((\omega_k + \Delta\omega)t)$$

Les sommes $S1_A$ et $S1_B$ de signaux sinusoïdaux sont ainsi décalées en fréquence, d'un décalage fréquentiel $\Delta\omega$

(exprimé par exemple en rad/s). Le décalage fréquentiel $\Delta\omega$ est préférentiellement compris dans la plage allant de 100 Hz à 1 kHz. Chaque base émettrice 4A, 4B est avantageusement configurée pour synchroniser entre eux les signaux sinusoïdaux qu'elle émet.

En référence à la figure 1, on suppose dans la suite de la description que l'environnement dans lequel évolue le mobile récepteur 2 comprend un premier obstacle O1 et un second obstacle O2. Les deux obstacles O1 et O2 sont ici des bâtiments, mais pourraient en variante être formés de toute autre type de structure sans affecter pour autant le raisonnement qui va suivre. Pour chaque base émettrice 4A, 4B, les signaux radiofréquences reçus par le mobile récepteur 2 et issus de cette base 4A, 4B se répartissent en deux types : un premier type consiste en les signaux $s_{dA}$, $s_{dB}$ arrivant en ligne de vue directe, et un second type consiste en les signaux $s_{rA}$, $s_{rB}$ arrivant sur le mobile récepteur 2 suite à un rebond sur un obstacle O1, O2. Les signaux $s_{dA}$, $s_{rA}$, respectivement $s_{dB}$, $s_{rB}$, correspondent chacun à la somme $S1_A$, respectivement $S1_B$, de signaux à porteuse pure non modulée, mais empruntent des trajets différents. On appelle $D_A$, respectivement $D_B$, la distance en ligne de vue directe entre le mobile récepteur 2 et la première base émettrice 4A, respectivement la seconde base émettrice 4B, parcourue par les signaux $s_{dA}$, respectivement $s_{dB}$. On appelle $D_{rA}$, respectivement $D_{rB}$, la distance parcourue par les signaux $s_{rA}$, respectivement $s_{rB}$ après rebond sur un obstacle O1, respectivement O2. A des fins de simplification on ne prend en compte par la suite, pour la première base émettrice 4A, que les signaux radiofréquences issus de cette base et ayant rebondi sur l'obstacle O1 le plus proche de cette base 4A (l'impact des signaux issus de cette base et ayant rebondi sur l'autre obstacle O2 étant considéré comme négligeable). De même, on ne prend en compte, pour la seconde base émettrice 4B, que les signaux radiofréquences issus de cette base et ayant rebondi sur l'obstacle O2 le plus proche de cette base 4B (l'impact des signaux issus de cette base et ayant rebondi sur l'autre obstacle O1 étant considéré comme négligeable). On suppose en outre pour simplifier que les signaux radiofréquences n'effectuent qu'un seul rebond sur un des obstacles O1, O2.

Le procédé de positionnement du mobile récepteur 2, mis en œuvre par le système de positionnement 1, va maintenant être décrit en détail, en référence notamment à la figure 2.

Le procédé comporte une étape initiale 10 de transmission de données de position des bases émettrices fixes 4A, 4B aux moyens de stockage du mobile récepteur 2. La transmission 10 peut par exemple consister en une transmission par chaque base émettrice 4A, 4B de ses coordonnées de position au mobile récepteur 2, ou encore en une implantation préalable des coordonnées de position des bases au sein du mobile récepteur 2, au moment de sa fabrication ou de son paramétrage. A l'issue de cette étape initiale 10, les moyens de stockage du mobile récepteur 2 stockent les données de position des bases émettrices 4A, 4B.

Le procédé comporte une étape suivante 12 au cours de laquelle chaque base émettrice 4A, 4B émet la somme $S1_A$, $S1_B$ de signaux à porteuse pure non modulée de fréquences $\omega_k$ distinctes. Le déphasage entre les signaux $S1_A$, $S1_B$ émis par les différentes bases émettrices 4A, 4B est constant. Les sommes $S1_A$ et $S1_B$ de signaux à porteuse pure émises par les bases 4A, 4B sont ainsi décalées en fréquence, d'un décalage fréquentiel $\Delta\omega$. Les différentes fréquences $\omega_k$ utilisées par les bases 4A, 4B, ainsi que le décalage fréquentiel $\Delta\omega$, sont connus par le mobile récepteur 2 (préimplantés dans ou transmis à ce dernier).

Au cours d'une étape suivante 14, le mobile récepteur 2 reçoit les signaux radiofréquences $s_{dA}$, $s_{dB}$, $s_{rA}$, $s_{rB}$ provenant des bases émettrices 4A, 4B. Ces signaux $s_{dA}$, $s_{rA}$, respectivement $s_{dB}$, $s_{rB}$, correspondent chacun à la somme $S1_A$, respectivement $S1_B$, de signaux à porteuse pure non modulée, mais empruntent des trajets différents. Grâce au fait que les sommes $S1_A$, $S1_B$ de signaux sont décalées en fréquence avec un décalage fréquentiel prédéterminé (connu du mobile récepteur 2), le mobile récepteur 2 peut distinguer les signaux $s_{dA}$, $s_{rA}$ issus de la première base 4A d'une part, des signaux $s_{dB}$, $s_{rB}$ issus de la seconde base émettrice 4B d'autre part.

Au cours d'une étape suivante 16, le mobile récepteur 2 détermine via ses moyens de mesure, pour chaque fréquence de signal $\omega_k$ donnée et pour chaque base émettrice 4A, 4B, la phase du signal constitué des différents signaux $s_{dA}$, $s_{rA}$; respectivement $s_{dB}$, $s_{rB}$, issus de cette base 4A, 4B et présentant la fréquence $\omega_k$. En effet, par exemple pour la première base 4A et pour une fréquence $\omega_k$ donnée, les deux signaux $s_{dA}(\omega_k)$ et $s_{rA}(\omega_k)$ sont reçus par le mobile récepteur 2 en étant mélangés. La phase mesurée par le mobile récepteur 2 pour la fréquence $\omega_k$ correspond alors à la phase du signal constitué de la somme du signal direct $s_{dA}$ et du signal rebond $s_{rA}$. Le même raisonnement s'applique pour les signaux $s_{dB}$, $s_{rB}$ issus de la seconde base 4B. Selon un exemple de réalisation particulier, cette mesure de phase peut consister en ce que les moyens de mesure appliquent, pour chaque fréquence $\omega_k$, un coefficient multiplicateur $e^{i\omega k}$ sur chaque signal constitué des différents signaux $s_{dA}$, $s_{rA}$; respectivement $s_{dB}$, $s_{rB}$, issus de la première base 4A, respectivement de la seconde base 4B. Ceci permet d'isoler la phase de chaque signal à porteuse pure non modulée faisant partie des signaux $s_{dA}$, $s_{rA}$, respectivement $s_{dB}$, $s_{rB}$.

Au cours d'une étape suivante 18 le mobile récepteur 2 applique, via ses moyens de calcul et pour chacune des bases émettrices 4A, 4B, une transformée de Fourier sur un signal constitué des différentes phases mesurées des signaux radiofréquences reçus de cette base. En effet, le principe utilisé par l'invention est que pour un retard temporel donné, le déphasage que subit un signal à porteuse pure non modulée dépend de la fréquence de ce signal. La transformée de Fourier appliquée au cours de l'étape 18 est typiquement une transformée de Fourier discrète, et notamment une transformée de Fourier discrète à coefficients complexes.

Pour chaque base émettrice 4A, 4B, la transformée de Fourier TF appliquée sur les phases mesurées des signaux issus de cette base s'exprime alors mathématiquement via la fonction suivante :

[Math 5]

$$TF(d_n) = \sum_{k=1}^{N} r(\omega_k) . e^{-i\omega_k \frac{d_n}{c}}$$

où $r(\omega_k)$ est la phase des signaux issus de la base et ayant pour fréquence $\omega_k$, telle que mesurée au cours de l'étape précédente 16 ; et $\frac{d_n}{c}$ représente le temps de vol d'un signal issu de la base émettrice 4A, 4B en question et reçu par le mobile récepteur 2. Les coefficients complexes de la transformée de Fourier TF sont alors : $e^{-i\omega_k \frac{d_n}{c}}$. La variable indépendante de la transformée de Fourier TF ainsi exprimée est alors le temps de vol $\frac{d_n}{c}$.

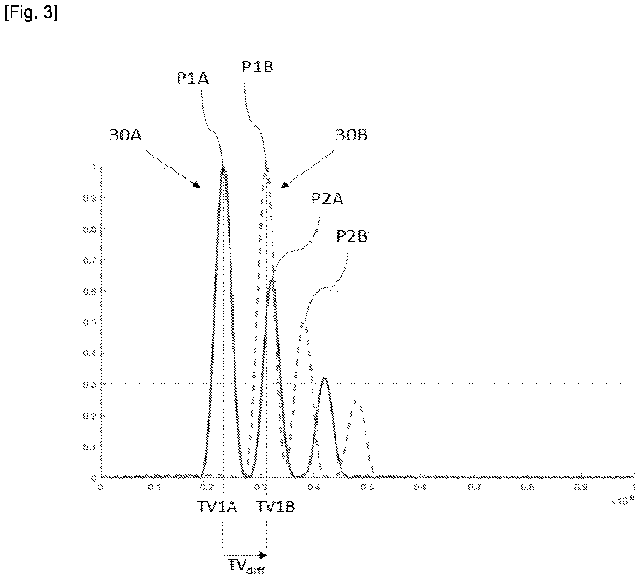

De cette façon, en représentant graphiquement, pour chaque base émettrice 4A, 4B, le résultat de la transformée de Fourier appliquée au cours de l'étape 18, les moyens de calcul peuvent au cours d'une étape suivante 20 isoler différents pics correspondant à chaque signal $s_{dA}$, $s_{rA}$ ou $s_{dB}$, $s_{rB}$, et en déduire le temps de vol de chacun de ces signaux. Ceci est illustré sur le graphique de la figure 3, sur lequel deux fonctions graphiques 30A, 30B ont été représentées. Ces deux fonctions 30A, 30B correspondent respectivement au calcul de la transformée de Fourier pour la première base émettrice 4A, et pour la seconde base émettrice 4B, représenté en fonction du temps de vol (qui se lit donc sur l'axe des abscisses). Au cours de cette étape 20, les moyens de calcul du mobile récepteur 2 déterminent le temps de vol entre le mobile récepteur 2 et chacune des bases 4A, 4B. Pour ce faire, les moyens de calcul isolent le pic P1A, P1B ayant le temps de vol le plus court. Ce pic P1A, P1B correspond au signal $s_{dA}$, $s_{dB}$ en ligne de vue directe. Dans l'exemple de réalisation représenté, pour la première base 4A, le pic P1A correspondant au signal $s_{dA}$ présente un temps de vol TV1A sensiblement égal à 230 ns. Le temps de vol TV1A entre le mobile récepteur 2 et la première base 4A est donc de sensiblement 230 ns. Pour la seconde base 4B, le pic P1B correspondant au signal $s_{dB}$ présente un temps de vol TV1B sensiblement égal à 310 ns. Le temps de vol TV1B entre le mobile récepteur 2 et la seconde base 4B est donc de sensiblement 310 ns. Pour chacune des bases 4A, 4B, le second pic P2A, P2B, qui a une amplitude plus faible que celle du premier pic P2A, P2B et un temps de vol plus long, correspond au signal $s_{rA}$, $s_{rB}$ ayant subi un rebond sur un obstacle O1, O2. Ce pic P2A, P2B peut donc être avantageusement isolé du premier pic P1A, P1B, et ne pas être pris en compte dans la suite des calculs.

Au cours d'une étape suivante 22, le mobile récepteur 2 calcule au moins une différence de temps de vol TV$_{diff}$ entre le mobile 2 et deux bases émettrices 4A, 4B. La différence de temps de vol TV$_{diff}$ est calculée comme la différence entre les temps de vol TV1A, TV1B déterminés pour les bases émettrices 4A, 4B lors de l'étape 20. Dans l'exemple de réalisation représenté sur la figure 3, la différence de temps de temps de vol TV$_{diff}$ est sensiblement égale à 80 ns (310 ns - 230 ns). Dans le cas où le système de positionnement comporte un nombre de bases émettrices supérieur ou égal à trois, le mobile récepteur 2 calcule plusieurs différences de temps de vol, entre le mobile et des bases émettrices prises deux à deux, chaque différence de temps de vol étant calculée entre le mobile 2 et deux bases émettrices distinctes.

Au cours d'une étape finale 24, les moyens de calcul du mobile récepteur 2 déterminent la position du mobile récepteur 2 à partir de la ou des différence(s) de temps de vol TV$_{diff}$ calculée(s) et des données de position des bases émettrices 4A, 4B, préalablement stockées dans les moyens de stockage. A partir des données de position connues des bases émettrices 4A, 4B, la position absolue du mobile récepteur est facilement donnée par la relation classique entre célérité des ondes et différence de temps de vol. Dans le cas où le système de positionnement comporte un nombre de bases émettrices supérieur ou égal à trois, les moyens de calcul du mobile récepteur 2 croisent les différentes mesures de différences de temps de vol afin de déterminer la position du mobile récepteur 2.

Du fait que l'ordre de grandeur de la ou des différences(s) de temps de vol ainsi déterminées est autour de la nanoseconde, on comprend à la lecture de ce qui précède que le système 1 selon l'invention permet avantageusement d'atteindre une précision sub-métrique (inférieure à 1 m) pour le positionnement du mobile 2, et ce même à l'intérieur de bâtiments ou en environnement urbain. En outre, le mobile récepteur 2 procède à son propre positionnement de manière autonome. Enfin, le système de positionnement 1 présente à la fois une grande portée (typiquement supérieure à 10 km), fonctionne aussi bien en environnement extérieur qu'intérieur, et présente une occupation spectrale limitée, une sensibilité augmentée et une bande de bruit équivalent réduite au maximum. Toutes ces caractéristiques, obtenues ensemble dans un même système, sont inédites et particulièrement avantageuses comparativement aux différents systèmes de positionnement de l'art antérieur.

**Revendications**

1. Système (1) de positionnement d'au moins un mobile récepteur (2), le système (1) comprenant, outre le mobile (2), au moins deux bases émettrices fixes (4, 4A, 4B), chaque base émettrice (4, 4A, 4B) étant configurée pour émettre des signaux radiofréquences ($S1_A$, $S1_B$, $s_{dA}$, $s_{dB}$, $s_{rA}$, $s_{rB}$), les bases émettrices (4, 4A, 4B) étant synchronisées entre elles pour émettre leurs signaux respectifs, le mobile récepteur (2) étant configuré pour recevoir et traiter lesdits signaux radiofréquences ($s_{dA}$, $s_{dB}$, $s_{rA}$, $s_{rB}$) et pour en déduire sa position par calcul de différence(s) de temps de vol entre le mobile récepteur (2) et les bases émettrices (4, 4A, 4B), le mobile récepteur (2) comprenant des moyens de stockage de données de position des bases émettrices fixes (4, 4A, 4B),

   *caractérisé* en *ce que* chaque base émettrice (4, 4A, 4B) est configurée pour émettre une somme ($S1_A$, $S1_B$) d'au moins deux signaux à porteuse pure non modulée de fréquences distinctes, chaque signal à porteuse pure se présentant sous la forme d'une onde entretenue non modulée, de préférence sinusoïdale ;
   et **en ce que** le mobile récepteur (2) comprend en outre :

   • des moyens de mesure, pour chaque fréquence de signal donnée et pour chaque base émettrice respective (4A, 4B), de la phase du signal constitué des différents signaux ($s_{dA}$, $s_{rA}$ ; $s_{dB}$, $s_{rB}$) issus de ladite base et présentant ladite fréquence ; et
   • des moyens de calcul reliés aux moyens de mesure et aux moyens de stockage, et configurés pour :

      o appliquer, pour chaque base émettrice (4A, 4B), une transformée de Fourier sur un signal constitué des différentes phases mesurées des signaux radiofréquences issus de ladite base (4A, 4B) ;
      o déterminer, pour chaque base émettrice (4A, 4B), à partir de la transformée de Fourier calculée pour ladite base, un temps de vol entre le mobile récepteur (2) et ladite base (4A, 4B) ;
      o calculer au moins une différence de temps de vol entre le mobile (2) et deux bases émettrices (4A, 4B), ladite différence étant calculée comme la différence entre les temps de vol déterminés pour lesdites bases (4A, 4B) ;
      o déterminer la position du mobile récepteur (2), à partir de la ou des différence(s) de temps de vol calculée(s) et des données de position des bases émettrices (4A, 4B).

2. Système (1) selon la revendication précédente, **caractérisé en ce que**, pour chaque base émettrice (4, 4A, 4B), l'écart fréquentiel entre la fréquence minimale et la fréquence maximale des signaux à porteuse pure émis par ladite base (4, 4A, 4B) est supérieur à 50 MHz.

3. Système (1) selon la revendication 1 ou 2, **caractérisé en ce que** chaque signal à porteuse pure émis par une base émettrice (4, 4A, 4B) présente une fréquence située dans la bande des très hautes fréquences, autrement dit présente une fréquence comprise dans la plage allant de 30 MHz à 300 MHz.

4. Système (1) selon l'une quelconque des revendications précédentes, **caractérisé en ce que** les bases émettrices fixes (4, 4A, 4B) sont configurées pour émettre le même nombre de signaux à porteuse pure non modulée.

5. Système (1) selon la revendication précédente, **caractérisé en ce que** les bases émettrices fixes (4, 4A, 4B) sont configurées de sorte à émettre leurs sommes ($S1_A$, $S1_B$) de signaux à porteuse pure non modulée de manière décalée en fréquence, avec un décalage fréquentiel prédéterminé entre deux bases émettrices successives (4).

6. Système (1) selon la revendication précédente, **caractérisé en ce que** le décalage fréquentiel est compris dans la plage allant de 100 Hz à 1 kHz.

7. Système (1) selon l'une quelconque des revendications précédentes, **caractérisé en ce que** les bases émettrices fixes (4, 4A, 4B) sont des antennes, de préférence des antennes réparties de telle sorte que la distance entre deux antennes adjacentes est supérieure ou égale à 5 kms.

8. Système (1) selon l'une quelconque des revendications précédentes, **caractérisé en ce que** le mobile récepteur (2) est une puce ou une carte électronique ou encore un appareil de communication mobile tel qu'un téléphone portable.

9. Système (1) selon l'une quelconque des revendications précédentes, **caractérisé en ce que** chaque base émettrice fixe (4, 4A, 4B) est configurée pour synchroniser entre eux les signaux à porteuse pure non modulée émis par la base (4, 4A, 4B).

**10.** Système (1) selon l'une quelconque des revendications précédentes, **caractérisé en ce que** chaque base émettrice fixe (4, 4A, 4B) est configurée pour émettre une somme S1 de N signaux sinusoïdaux non modulés de fréquences $\omega_k$ distinctes, ladite somme S1 vérifiant la forme de l'équation suivante :

[Math 6]

$$S1 = \sum_{k=1}^{N} \cos(\omega_k t)$$

**11.** Procédé de positionnement d'au moins un mobile récepteur (2), mis en œuvre par un système de positionnement (1) comprenant, outre le mobile (2), au moins deux bases émettrices fixes (4, 4A, 4B), chaque base émettrice (4, 4A, 4B) étant configurée pour émettre des signaux radiofréquences ($S1_A$, $S1_B$, $s_{dA}$, $s_{dB}$, $s_{rA}$, $s_{rB}$), les bases émettrices (4, 4A, 4B) étant synchronisées entre elles pour émettre leurs signaux respectifs, le mobile récepteur (2) comprenant des moyens de mesure de phases de signaux, des moyens de stockage de données, et des moyens de calcul reliés aux moyens de mesure et aux moyens de stockage, le procédé comprenant une étape initiale (10) de transmission de données de position des bases émettrices fixes (4A, 4B) aux moyens de stockage du mobile récepteur (2), **caractérisé** en **ce qu'il** comprend en outre les étapes suivantes :

• une émission (12), par chacune des bases émettrices (4A, 4B), d'une somme ($S1_A$, $S1_B$) d'au moins deux signaux à porteuse pure non modulée de fréquences distinctes, chaque signal à porteuse pure se présentant sous la forme d'une onde entretenue non modulée, de préférence sinusoïdale ;
• une réception (14), par le mobile récepteur (2), des signaux radiofréquences ($s_{dA}$, $s_{dB}$, $s_{rA}$, $s_{rB}$) issus des bases émettrices (4A, 4B) ;
• une mesure (16), par le mobile récepteur (2), pour chaque fréquence de signal donnée et pour chaque base émettrice respective (4A, 4B), de la phase du signal constitué des différents signaux ($s_{dA}$, $s_{rA}$ ; $s_{dB}$, $s_{rB}$) issus de ladite base et présentant ladite fréquence ;
• une application (18), par le mobile récepteur (2) et pour chaque base émettrice (4A, 4B), d'une transformée de Fourier sur un signal constitué des différentes phases mesurées des signaux radiofréquences reçus de ladite base (4A, 4B) ;
• une détermination (20), par le mobile récepteur (2) et pour chaque base émettrice (4A, 4B), à partir de la transformée de Fourier calculée pour ladite base (4A, 4B), d'un temps de vol (TV1A, TV1B) entre le mobile récepteur (2) et ladite base (4A, 4B) ;
• un calcul (22), par le mobile récepteur (2), d'au moins une différence de temps de vol ($TV_{diff}$) entre le mobile (2) et deux bases émettrices (4A, 4B), ladite différence ($TV_{diff}$) étant calculée comme la différence entre les temps de vol (TV1A, TV1B) déterminés pour lesdites bases (4A, 4B) ;
• une détermination (24), par le mobile récepteur (2), de sa position à partir de la ou des différence(s) de temps de vol ($TV_{diff}$) calculée(s) et des données de position des bases émettrices (4A, 4B).

**12.** Procédé selon la revendication 11, **caractérisé en ce que**, lors de l'étape (18) d'application d'une transformée de Fourier, la transformée de Fourier est une transformée de Fourier discrète.

**13.** Procédé selon la revendication 11 ou 12, **caractérisé en ce que**, lors de l'étape (18) d'application d'une transformée de Fourier, les moyens de calcul du mobile récepteur (2) utilisent le temps de vol comme variable indépendante pour la transformée de Fourier appliquée.

**Patentansprüche**

**1.** System (1) für eine Positionierung mindestens einer Empfangsmobilvorrichtung (2), wobei das System (1) zusätzlich zu der Mobilvorrichtung (2) mindestens zwei ortsfeste Sendebasen (4, 4A, 4B) umfasst, wobei jede Sendebasis (4, 4A, 4B) zum Senden von Hochfrequenzsignalen ($S1_A$, $S1_B$, $s_{dA}$, $s_{dB}$, $s_{rA}$, $S_{rB}$) konfiguriert ist, wobei die Sendebasen (4, 4A, 4B) miteinander synchronisiert sind, um ihre jeweiligen Signale zu senden, wobei die Empfangsmobilvorrichtung (2) konfiguriert ist, um die Hochfrequenzsignale ($S_{dA}$, $S_{dB}$, $S_{rA}$, $S_{rB}$) zu empfangen und verarbeiten und um ihre Position durch Berechnen von Flugzeitdifferenz(en) zwischen der Empfangsmobilvorrichtung (2) und den Sendebasen (4, 4A, 4B) abzuleiten, wobei die Empfangsmobilvorrichtung (2) Mittel zum Speichern von Positionsdaten der ortsfesten Sendebasen (4, 4A, 4B) umfasst,

***dadurch gekennzeichnet, dass*** jede Sendebasis (4, 4A, 4B) zum Senden einer Summe (S1$_A$, S1$_B$) von mindestens zwei unmodulierten reinen Trägersignalen unterschiedlicher Frequenzen konfiguriert ist, wobei jedes reine Trägersignal in Form einer unmodulierten ungedämpften Welle, vorzugsweise sinusförmig, auftritt; und **dass** die Empfangsmobilvorrichtung (2) ferner umfasst:

• Mittel zum Messen der Signalphase, die aus den verschiedenen Signalen (s$_{dA}$, s$_{rA}$, s$_{dB}$, s$_{rB}$), die von der Basis ausgegeben werden, besteht, für jede gegebene Signalfrequenz und für jede jeweilige Sendebasis (4A, 4B) und aufweisend die Frequenz; und

• Berechnungsmittel, die mit den Messmitteln und den Speichermitteln verbunden und konfiguriert sind zum:

○ Anwenden, für jede Sendebasis (4A, 4B), einer Fourier-Transformation auf ein Signal, das aus den verschiedenen gemessenen Phasen der von der Basis (4A, 4B) ausgegebenen Hochfrequenzsignale besteht;

○ Bestimmen, für jede Sendebasis (4A, 4B), aus defür die Basis berechneten Fourier-Transformation einer Flugzeit zwischen der Empfangsmobilvorrichtung (2) und der Basis (4A, 4B);

○ Berechnen mindestens einer Flugzeitdifferenz zwischen der Mobilvorrichtung (2) und zwei Sendebasen (4A, 4B), wobei diese Differenz als die Differenz zwischen den für die Basen (4A, 4B) bestimmten Flugzeiten berechnet wird;

○ Bestimmen der Position der Empfangsmobilvorrichtung (2) aus der oder den berechneten Flugzeitdifferenz(en) und den Positionsdaten der Sendebasen (4A, 4B).

2. System (1) nach dem vorstehenden Anspruch,
   **dadurch gekennzeichnet, dass** für jede Sendebasis (4, 4A, 4B) der Frequenzunterschied zwischen der minimalen Frequenz und der maximalen Frequenz der durch die Basis (4, 4A, 4B) gesendeten reinen Trägersignale größer als 50 MHz ist.

3. System (1) nach Anspruch 1 oder 2, **dadurch gekennzeichnet, dass** jedes durch eine Sendebasis (4, 4A, 4B) gesendete reine Trägersignal eine Frequenz aufweist, die sich in dem Band mit sehr hohen Frequenzen befindet, mit anderen Worten eine Frequenz in dem Bereich von 30 MHz bis 300 MHz aufweist.

4. System (1) nach einem der vorstehenden Ansprüche,
   **dadurch gekennzeichnet, dass** die ortsfesten Sendebasen (4, 4A, 4B) konfiguriert sind, um die gleiche Anzahl unmodulierter reiner Trägersignale zu senden.

5. System (1) nach dem vorstehenden Anspruch,
   **dadurch gekennzeichnet, dass** die ortsfesten Sendebasen (4, 4A, 4B) zur Übertragung ihrer Summen (S1$_A$, S1$_B$) für reine, nicht frequenzverschobene, modulierte Trägersignale mit einer vorbestimmten Frequenzverschiebung zwischen zwei aufeinanderfolgenden Sendebasen (4) konfiguriert sind.

6. System (1) nach dem vorstehenden Anspruch,
   **dadurch gekennzeichnet, dass** die Frequenzverschiebung in dem Bereich von 100 Hz bis 1 kHz liegt.

7. System (1) nach einem der vorstehenden Ansprüche,
   **dadurch gekennzeichnet, dass** die ortsfesten Sendebasen (4, 4A, 4B) Antennen, vorzugsweise Antennen, die so verteilt sind, dass der Abstand zwischen zwei angrenzenden Antennen größer als oder gleich 5 km ist, sind.

8. System (1) nach einem der vorstehenden Ansprüche,
   **dadurch gekennzeichnet, dass** die Empfangsmobilvorrichtung (2) ein Chip oder eine Leiterplatte oder auch eine mobile Kommunikationseinrichtung wie ein Mobiltelefon ist.

9. System (1) nach einem der vorstehenden Ansprüche,
   **dadurch gekennzeichnet, dass** jede ortsfeste Sendebasis (4, 4A, 4B) konfiguriert ist, um die durch die Basis (4, 4A, 4B) gesendeten unmodulierten reinen Trägersignale miteinander zu synchronisieren.

10. System (1) nach einem der vorstehenden Ansprüche,
    **dadurch gekennzeichnet, dass** jede ortsfeste Sendebasis (4, 4A, 4B) konfiguriert ist, um eine Summe S1 von N unmodulierten Sinussignalen unterschiedlicher ωk-Frequenzen zu senden, wobei die Summe S1 die Form der folgenden Gleichung verifiziert:

[Math. 6]

$$S1 = \sum_{k=1}^{N} \cos(\omega_k t)$$

**11.** Verfahren zum Positionieren mindestens einer Empfangsmobilvorrichtung (2), das durch ein Positionierungssystem (1) implementiert wird, umfassend neben der Mobilvorrichtung (2) mindestens zwei ortsfeste Sendebasen (4, 4A, 4B), wobei jede Sendebasis (4, 4A, 4B) konfiguriert ist, um Hochfrequenzsignale ($S1_A$, $S1_B$, $S_{DA}$, $S_{DB}$, $S_{RA}$, $S_{RB}$) zu senden, wobei die Sendebasen (4, 4A, 4B) miteinander synchronisiert sind, um ihre jeweiligen Signale zu senden, wobei die Empfangsmobilvorrichtung (2) Mittel zum Messen von Signalphasen, Datenspeichermittel und Berechnungsmittel umfasst, die mit den Messmitteln und den Speichermitteln verbunden sind, wobei das Verfahren einen anfänglichen Schritt (10) des Übertragens von Positionsdaten von den ortsfesten Sendebasen (4A, 4B) an die Mittel zum Speichern der Empfangsmobilvorrichtung (2) umfasst,
**dadurch gekennzeichnet, dass es** ferner die folgenden Schritte umfasst:

• Senden (12), durch jede Sendebasis (4A, 4B), einer Summe ($S1_A$, $S1_B$) von mindestens zwei unmodulierten reinen Trägersignalen unterschiedlicher Frequenzen, wobei jedes reine Trägersignal in Form einer unmodulierten ungedämpften Welle, vorzugsweise sinusförmig, auftritt;
• Empfangen (14), durch die Empfangsmobilvorrichtung (2), von Hochfrequenzsignalen ($s_{dA}$, $s_{dB}$, $s_{rA}$, $S_{rB}$), die von den Sendebasen (4A, 4B) ausgegeben werden;
• Messen (16), durch die Empfangsmobilvorrichtung (2), der Signalphase, die aus den verschiedenen Signalen ($s_{DA}$, $s_{rA}$, $s_{dB}$, $s_{rB}$), die von der Basis ausgegeben werden, besteht, für jede gegebene Signalfrequenz und für jede jeweilige Sendebasis (4A, 4B) und aufweisend die Frequenz;
• Anwenden (18), durch die Empfangsmobilvorrichtung (2) und für jede Sendebasis (4A, 4B), einer Fourier-Transformation auf ein Signal, das aus den verschiedenen gemessenen Phasen der von der Basis (4A, 4B) empfangenen Hochfrequenzsignale besteht;
• Bestimmen (20), durch die Empfangsmobilvorrichtung (2) und für jede Sendebasis (4A, 4B), aus der für die Basis (4A, 4B) berechneten Fourier-Transformation einer Flugzeit (TV1A, TV1B) zwischen der Empfangsmobilvorrichtung (2) und der Basis (4A, 4B);
• Berechnen (22) mindestens einer Flugzeitdifferenz ($TV_{diff}$) durch die Empfangsmobilvorrichtung (2) zwischen der Mobilvorrichtung (2) und den zwei Sendebasen (4A, 4B), wobei die Differenz ($TV_{diff}$) als die Differenz zwischen den für die Basen (4A, 4B) bestimmten Flugzeiten (TV1A, TV1B) berechnet wird;
• Bestimmen (24), durch die Empfangsmobilvorrichtung (2), ihrer Position aus der oder den berechneten Flugzeitdifferenz(en) ($TV_{diff}$) und den Positionsdaten der Sendebasen (4A, 4B).

**12.** Verfahren nach Anspruch 11, **dadurch gekennzeichnet, dass** während des Schritts (18) zum Anwenden einer Fourier-Transformation es sich bei der Fourier-Transformation um eine diskrete Fourier-Transformation handelt.

**13.** Verfahren nach Anspruch 11 oder 12, **dadurch gekennzeichnet, dass** während des Schritts (18) zum Anwenden einer Fourier-Transformation die Berechnungsmittel der Empfangsmobilvorrichtung (2) die Flugzeit als unabhängige Variable für die angewendete Fourier-Transformation verwenden.

## Claims

**1.** A system (1) for positioning at least one mobile receiver (2), the system (1) comprising, in addition to the mobile (2), at least two stationary transmitter bases (4, 4A, 4B), each transmitter base (4, 4A, 4B) being configured to transmit radio frequency signals ($S1_A$, $S1_B$, $s_{dA}$, $s_{dB}$, $s_{rA}$, $s_{rB}$), the transmitter bases (4, 4A, 4B) being synchronized to each other to transmit their respective signals, the mobile receiver (2) being configured to receive and process said radio frequency signals ($s_{dA}$, $s_{dB}$, $s_{rA}$, $s_{rB}$) and to deduce therefrom its position by calculating the time-of-flight difference(s) between the mobile receiver (2) and the transmitter bases (4, 4A, 4B), the mobile receiver (2) comprising means for storing position data of the stationary transmitter bases (4, 4A, 4B),

**characterized in that** each transmitter base (4, 4A, 4B) is configured to transmit a sum ($S1_A$, $S1_B$) of at least two unmodulated pure carrier signals of different frequencies, each pure carrier signal being in the form of an unmodulated continuous wave, which is preferably sinusoidal;

and **in that** the mobile receiver (2) further comprises:

- means for measuring, for each given signal frequency and for each respective transmitter base (4A, 4B), the phase of the signal consisting of the various signals ($s_{dA}$, $s_{rA}$, $s_{dB}$, $s_{rB}$) coming from said base and having said frequency; and
- computing means connected to the measuring means and to the storage means, and configured to:

  o apply, for each transmitter base (4A, 4B), a Fourier transform to a signal consisting of the various measured phases of the radio frequency signals coming from said base (4A, 4B);
  o determine, for each transmitter base (4A, 4B), from the Fourier transform computed for said base, a time-of-flight between the mobile receiver (2) and said base (4A, 4B);
  o calculate at least one time-of-flight difference between the mobile (2) and two transmitter bases (4A, 4B), said difference being calculated as the difference between the determined times-of-flight for said bases (4A, 4B);
  o determine the position of the mobile receiver (2), from the calculated time-of-flight difference(s) and position data of the transmitter bases (4A, 4B).

2. The system (1) according to the preceding claim, **characterized in that,** for each transmitter base (4, 4A, 4B), the frequency difference between the minimum frequency and the maximum frequency of the pure carrier signals transmitted by said base (4, 4A, 4B) is greater than 50 MHz.

3. The system (1) according to claim 1 or 2, **characterized in that** each pure carrier signal transmitted by a transmitter base (4, 4A, 4B) has a frequency located in the band of very high frequencies, in other words has a frequency in the range from 30 MHz to 300 MHz.

4. The system (1) according to any one of the preceding claims, **characterized in that** the stationary transmitter bases (4, 4A, 4B) are configured to transmit the same number of unmodulated pure carrier signals.

5. The system (1) according to the preceding claim, **characterized in that** the stationary transmitter bases (4, 4A, 4B) are configured so as to transmit their sums ($S1_A$, $S1_B$) of unmodulated pure carrier signals in a frequency-shifted manner, with a predetermined frequency shift between two successive transmitter bases (4).

6. The system (1) according to the preceding claim, **characterized in that** the frequency shift is in the range from 100 Hz to 1 kHz.

7. The system (1) according to any one of the preceding claims, **characterized in that** the stationary transmitter bases (4, 4A, 4B) are antennas, preferably antennas distributed such that the distance between two adjacent antennas is greater than or equal to 5 km.

8. The system (1) according to any one of the preceding claims, **characterized in that** the mobile receiver (2) is a chip or an electronic card or else a mobile communication device such as a cell phone.

9. The system (1) according to any one of the preceding claims, **characterized in that** each stationary transmitter base (4, 4A, 4B) is configured to synchronize between them the unmodulated pure carrier signals transmitted by the base (4, 4A, 4B).

10. The system (1) according to any one of the preceding claims, **characterized in that** each stationary transmitter base (4, 4A, 4B) is configured to transmit a sum S1 of N unmodulated sinusoidal signals of different frequencies $\omega_k$, said sum S1 satisfying the following equation:

[Math 6]

$$S1 = \sum_{k=1}^{N} \cos(\omega_k t)$$

11. A method for positioning at least one mobile receiver (2), implemented by a positioning system (1) comprising, in addition to the mobile (2), at least two stationary transmitter bases (4, 4A, 4B), each transmitter base (4, 4A, 4B) being configured to transmit radio frequency signals ($S1_A$, $S1_B$, $s_{dA}$, $s_{dB}$, $s_{rA}$, $s_{rB}$), the transmitter bases (4, 4A, 4B) being synchronized to each other to transmit their respective signals, the mobile receiver (2) comprising means for measuring signal phases, data storage means, and computing means connected to the measuring means and to the storage means, the method comprising an initial step (10) of transmitting position data from the stationary transmitter bases (4A, 4B) to the storage means of the mobile receiver (2),

***characterized in that*** it further comprises the following steps:

- an emission (12), by each of the transmitter bases (4A, 4B), of a sum ($S1_A$, $S1_B$) of at least two unmodulated pure carrier signals of different frequencies, each pure carrier signal being in the form of an unmodulated continuous wave, which is preferably sinusoidal;
- a reception (14), by the mobile receiver (2), of the radio frequency signals ($s_{dA}$, $s_{dB}$, $s_{rA}$, $s_{rB}$) coming from the transmitter bases (4A, 4B);
- a measurement (16), by the mobile receiver (2), for each given signal frequency and for each respective transmitter base (4A, 4B), of the phase of the signal consisting of the various signals ($s_{DA}$, $s_{rA}$; $s_{dB}$, $s_{rB}$) coming from said base and having said frequency;
- an application (18), by the mobile receiver (2) and for each transmitter base (4A, 4B), of a Fourier transform to a signal consisting of the different measured phases of the radio frequency signals received from said base (4A, 4B);
- a determination (20), by the mobile receiver (2) and for each transmitter base (4A, 4B), from the Fourier transform computed for said base (4A, 4B), of a time-of-flight (TV1A, TV1B) between the mobile receiver (2) and said base (4A, 4B);
- a calculation (22), by the mobile receiver (2), of at least one time-of-flight difference ($TV_{diff}$) between the mobile (2) and two transmitter bases (4A, 4B), said difference ($TV_{diff}$) being calculated as the difference between the determined times-of-flight (TV1A, TV1B) for said bases (4A, 4B);
- a determination (24), by the mobile receiver (2), of its position from the calculated time-of-flight difference(s) ($TV_{diff}$) and from the position data of the transmitter bases (4A, 4B).

12. The method according to claim 11, **characterized in that,** during the step (18) of applying a Fourier transform, the Fourier transform is a discrete Fourier transform.

13. The method according to claim 11 or 12, **characterized in that,** during the step (18) of applying a Fourier transform, the computing means of the mobile receiver (2) use the time-of-flight as an independent variable for the applied Fourier transform.

EP 4 323 789 B1

[Fig. 1]

[Fig. 2]

15

[Fig. 3]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20200209337 A1

- US 2015201309 A1